# EUROPEAN PATENT APPLICATION

(11) **EP 1 800 720 A1**
(43) Date of publication of application: **27.06.2007**
(21) Application number: 06026366.2
(22) Date of filing: 19.12.2006
(51) Int. Cl.: A63F 13/00

(54) **Ability value display control in a video game**

(30) Priority: 20.12.2005 JP 2005365656
(71) Applicant: Kabushiki Kaisha Square Enix (also trading as Square Enix Co., Ltd.), Tokyo 151-8544 (JP)
(72) Inventor: Arakawa, Takeshi, Tokyo 151-8544 (JP); Kanemori, Yuichi, Tokyo 151-8544 (JP)
(74) Representative: Grünecker, Kinkeldey, Stockmair & Schwanhäusser Anwaltssozietät

(57) **Abstract**

A player character' s current ability value, which changes in accordance with a game progress, is displayed in such a way that a player is able to grasp the value instinctively and instantaneously without feeling visual impediment. A player character (PC) table and an enemy character (EC) table are updated. A hit point ratio (HPP), which is a ratio of hit points (HP) to a maximum hit point value (HPMAX), is calculated by using HP in the updated PC table. A drawing hit point angle (HPA) is calculated by HPA=HPPx360°. Furthermore, the drawing angle HPA portion of a ring gauge is displayed in a predetermined color. Consequently, a length and angle of a belt portion of each ring gauge changes in accordance with the change of the HP as the game advances. As the length of the belt portion only changes inside the ring gauge, even in the case where it becomes long, no visual effect is brought about on a game area of a display screen.

## Description

The present disclosure relates to subject matter contained in Japanese Patent Application No. 2005-365656, filed on December 20, 2005, the disclosure of which is expressly incorporated herein by reference in its entirety.

The present invention relates to a game apparatus which advances a game by displaying on a display screen an ability value of a character, such as HP (hit points) and MP (magic points), which value has a more advantageous effect in a virtual battle the greater it is; an ability value display control method in a video game; an ability value display control program; and a recording medium in which the ability value display control program is recorded.

Conventionally, for example, in a role playing game, a game is advanced while displaying on a screen current ability values for the HP, the MP and the like, for a player character controlled by a player operating an input device such as a controller. In Japanese Unexamined Patent Publication No. 2003-24633, the current ability value is displayed in a form of a bar gauge, and a length of the bar gauge is changed according to the current ability value. Therefore, when the player character's HP and MP decrease, the bar gauge becomes shorter, while when they increase, the bar gauge becomes longer. Consequently, by checking the bar gauge displayed on the screen, it is possible for the player to easily grasp the current ability value of the player character, which constantly changes along with a progression of the game.

However, when displaying the ability value of the player character in the form of the bar gauge in this way, the bar gauge gets longer when the ability value increases. As a result, as a display area of the bar gauge on the display screen increases, a remaining game display area decreases accordingly. Thus, although there is an advantage that it is possible to instinctively and instantaneously grasp the player character's current ability value, a disadvantage arises in that a visual impediment should occur to the player carrying out a game operation while checking a character, etc. displayed in the game display area.

The present invention is made in view of these problems. It is an object of the present invention to provide a game apparatus, an ability value display control method in a video game, an ability value display control program, and a recording medium in which the ability value display control program is recorded, which can display the player character' s current ability value, which changes along with the progress of the game so that the player should grasp the current ability value instinctively .and instantaneously with no visual impediment to the player.

In order to solve the problem, according to a first aspect of the invention, there is provided a game apparatus which realizes a virtual battle between characters on a display screen and changes an ability value of the character, which value has a more advantageous effect in the virtual battle the greater it is, and thereby advances a game. The apparatus includes an acquisition system that acquires a current ability value of the character, which value changes along with a progression of the game. The apparatus further includes a calculator that calculates a ratio of the current ability value to a maximum ability value set in advance for the character. The apparatus further includes a display processor that displays the current ability value as a ratio in a circular gauge on the display screen based on the ratio calculated by the calculator.

Consequently, when the character's current ability value changes along with the progression of the game, the current ability value is displayed as a ratio of the current ability value to the maximum ability value. Since the ability value is displayed in a form of a circular gauge, however much the current ability value increases, the display area of the gauge does not increase. As a result, it is possible to display the character's current ability value with no visual impediment to a game area in which the character and the like are displayed. Also, as the gauge is circular, the player is able to grasp the character's current ability value not only through a length of a portion of the gauge corresponding to the ratio, but also by an angle of the portion corresponding to the ratio. Thus, the player is able to grasp the character's current ability value instinctively and instantaneously.

In the game apparatus, multiple types of the ability values are provided, and the acquisition system acquires the current ability value for each of the types. The calculator calculates the ratio for each of the types. In addition, the display processor divides the circular gauge into a plurality of portions according to each of the types and displays the current ability value as a ratio in each of the portions. Accordingly, it is possible to display a plurality of kinds of ability value as a ratio in a single gauge.

In the game apparatus, the display processor displays a corresponding character in a figure as an object or a picture inside the circular gauge. Accordingly, even in the case of a game in which multiple characters appear, a player is able to grasp at a glance which of the ability values displayed in the gauges is the ability value of which character by means of the character displayed in the figure inside the circular ring gauge.

In the game apparatus, the character is a player character controlled in accordance with an operation by a player. Accordingly, a player is able grasp instinctively and instantaneously the current ability value for the player character in which he or she is most interested.

In the game apparatus, the characters include the player character controlled in accordance with the operation by the player and a friendly character acting as a friend of the player character in the game. The acquisition system acquires the ability value for each of the player character and the friendly character. The calculator calculates the ratio for each of the player character and the friendly character. The display processor displays the current ability value as a ratio for each of the player character and the friendly character.
Accordingly, a player is able to grasp instinctively and instantaneously the current ability value for the player character and the friendly character in which he or she is most interested.

Also, according to a second aspect of the present invention, there is provided an ability value display control method in a video game, which realizes a virtual battle between characters on a display screen and changes an ability value of the character, which value has a more advantageous effect in the virtual battle the greater it is, and thereby advances a game. The method includes acquiring a current ability value of the character, which value changes along with a progression of the game. The method further includes calculating a ratio of the current ability value to a maximum ability value set in advance for the character. The method further includes displaying the current ability value as a ratio in a circular gauge on the display screen based on the calculated ratio.

In the ability value display control method, multiple types of the ability values are provided, and the current ability value is acquired for each of the types. The ratio is calculated for each category by the calculation. In addition, the circular gauge is divided into to multiple portions according to each of the types, and the current ability value is displayed as a ratio in each of the portions.

In the ability value display control method, a corresponding character is displayed in a figure inside the circular gauge.

In the ability value display control method, the character is a player character controlled in accordance with an operation by a player.

In the ability value display control method, the characters include the player character controlled in accordance with the operation by the player and a friendly character acting as a friend of the player character in the game. The ability value is acquired for each of the player character and the friendly character. The ratio is calculated for each of the player character and the friendly character. In addition, the current ability value is displayed as a ratio for each of the player character and the friendly character.

Consequently, a computer executing the above steps achieves operating effects identical to those of the first aspects.

Also, according to a third aspect of the present invention, there is provided an ability value display control program executed by a computer included in a game apparatus, which realizes a virtual battle between characters on a display screen and changes an ability value of the character, which value has a more advantageous effect in the virtual battle the greater it is, and thereby advances a game. The program causes the computer to acquire a current ability value of the character, which value changes along with a progression of the game. The program further causes the computer to calculate a ratio of the current ability value to a maximum ability value set in advance for the character. The program further causes the computer to display the current ability value as a ratio in a circular gauge on the display screen based on the calculated ratio.

In the ability value display control program, multiple types of the ability values are provided. The current ability value is acquired for each of the types. The ratio is calculated for each category by the calculation. In addition, the circular gauge is divided into a plurality of portions according to each of the types, and the current ability value is displayed as a ratio in each of the portions.

In the ability value display control program, a corresponding character is displayed in a figure inside the circular gauge.

In the ability value display control program, the character is a player character controlled in accordance with an operation by a player.

In the ability value display control program, the characters include the player character controlled in accordance with the operation by the player and a friendly character acting as a friend of the player character in the game. The ability value is acquired for each of the player character and the friendly character. The ratio is calculated for each of the player character and the friendly character. In addition, the current ability value is displayed as a ratio for each of the player character and the friendly character.

Consequently, a computer executing processing in accordance with the program achieves operating effects identical to those of the first aspect of the invention.

Also, according to a fourth aspect of the invention, there is provided a computer readable recording medium recording an ability value display control program executed by a computer included in a game apparatus, which realizes a virtual battle between characters on a display screen and changes an ability value of the character, which value has a more advantageous effect in the virtual battle the greater it is, and thereby advances a game. The program causes the computer to acquire a current ability value of the character, which value changes along with a progression of the game. The program further causes the computer to calculate a ratio of the current ability value to a maximum ability value set in advance for the character. The program further causes the computer to display the current ability value as a ratio in a circular gauge on the display screen based on the calculated ratio.

In the recording medium, multiple types of the ability values are provided. The current ability value is acquired for each of the types. The ratio is calculated for each category by the calculation. In addition, the circular gauge is divided into a plurality of portions according to each of the types, and the current ability value is displayed as a ratio in each of the portions.

In the recording medium, a corresponding character is displayed in a figure inside the circular gauge.

In the recording medium, the character is a player character controlled in accordance with an operation by a player.

In the recording medium, the characters include the player character controlled in accordance with the operation by the player and a friendly character acting as a friend of the player character in the game. The ability value is acquired for each of the player character and the friendly character. The ratio is calculated for each of the player character and the friendly character. In addition, the current ability value is displayed as a ratio for each of the player character and the friendly character.

Consequently, a computer executing processing in accordance with the program recorded in the recording medium achieves operating effects identical to those of the first aspect of the invention.

According to the invention described heretofore, when a character's current ability value changes along with a progression of a game, the current ability value is displayed as a ratio of the current ability value to the maximum ability value. As the display is carried out by means of a circular gauge, however much the current ability value increases, the display area of the gauge does not increase. Consequently, it is possible to display the character's current ability value with no visual impediment to a game area in which the character and the like are displayed. Also, as the gauge is circular, a player is able to grasp the character's current ability value not only through a length of a portion of the gauge corresponding to the ratio, but also by an angle of the portion corresponding to the ratio. Accordingly, the player is able to grasp the character's current ability value instinctively and instantaneously. As a result, it is possible to display the player character's current ability value, which changes along with the progression of the game, in such a way that the player should grasp the current ability value instinctively and instantaneously, with no visual impediment.
Fig. 1 is a block diagram showing an overall configuration of a game apparatus according to an embodiment of the invention;
Figs. 2A and 2B are schematic diagrams showing a PC table and an EC table, respectively, according to an embodiment of the invention;
Fig. 3 is a flowchart showing a processing procedure according to an embodiment of the invention;
Fig. 4 is a flowchart showing a processing procedure of pre-game start processing according to an embodiment of the invention;
Fig. 5 is a diagram showing a display screen example according to an embodiment of the invention;
Fig. 6 is a flowchart showing a processing procedure of an ability value display update process according to an embodiment of the invention;
Fig. 7 is a flowchart showing a processing procedure of pre-game start processing according to another embodiment of the invention;
Fig. 8 is a diagram showing a display screen example according to another embodiment of the invention; and
Fig. 9 is a flowchart showing a processing procedure of ability value display update processing according to another embodiment of the invention.

Hereafter, a description will be given of an embodiment of the invention with reference to the appended drawings. A home-use game device is applied in the embodiments hereinafter as an example.

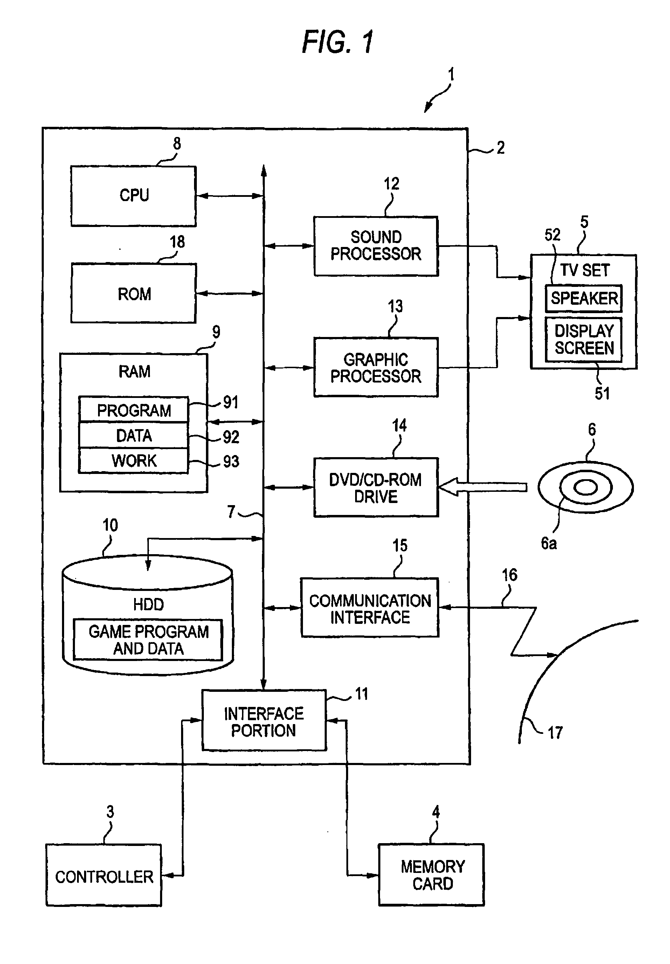

Fig. 1 is a block diagram showing a configuration of a game apparatus according to the embodiment. As shown in the figure, a game apparatus 1 includes, for example, a game machine main body 2, a controller 3, a memory card 4, a TV set 5 and a digital versatile disc - read only memory (DVD-ROM) 6.

The game machine main body 2 includes, for example, a central processing unit (CPU) 8, a read only memory (ROM) 18, a random access memory (RAM) 9, a hard disk drive (HDD) 10, and an interface portion 11. The game machine main body 2 further includes a sound processor 12, a graphic processor 13, a digital versatile disc / compact disc read only memory (DVD/CD-ROM) drive 14, a removable DVD-ROM 6, and a communications interface 15. All of the components are connected via a bus 7.

The CPU 8 executes a program stored in the RAM 9 sequentially based upon a basic program such as a boot program or an operating system (OS), etc., stored in the ROM 18 to advance the game. The CPU 8 also controls the operation of the respective components 9 to 15.

The RAM 9 serves as a main memory of the game machine main body 2. The RAM stores programs or data necessary for advancing the game, which programs or data are transferred from, for example, the DVD-ROM 6, or an external network 17, such as, for example, the Internet, via communication interface 15. The RAM 9 also serves as a work area when the program is executed. That is, a program storage area 91, a data storage area 92, a work area 93 and like are portioned in the RAM 9. The DVD/CD-ROM drive 14 reads the programs or data stored in the program storage area 91 and the data storage area 92 from the DVD-ROM 6 and transfers them to the RAM 9 in accordance with the control of the CPU 8. The work area 93 temporarily stores various kinds of data necessary in the game progress.

The HDD 10 stores a Game program and data acquired from the external network 17 via the communication interface 15 and a communication line 16. The controller 3 and memory card 4 are detachably connected to the interface portion 11. The interface portion 11 controls the exchange of data between the controller 3 and the memory card 4 and the CPU 8 and RAM 9. The controller 3 includes direction keys and various buttons. A player operates these keys and buttons to input instructions to a player's own character for advancing the game. The instructions include, for example, a movement instruction or an action instruction. The player's own character includes a player character and a friendly character to be described hereafter. In addition, the memory card 4 stores data indicating the game progress status.

The sound processor 12 executes the processing for reproducing sound data such as background music or sound effects in accordance with the game progress as instructed by the CPU 8. Then, the sound processor 12 outputs a sound signal to the TV set 5.

The graphics processor 13 carries out the three-dimensional graphics processing as instructed by the CPU 8 to generate image data in accordance with the game progress status. The graphics processor 13 adds a predetermined synchronization signal to the generated image data. Then, the graphics processor 13 outputs the image data and the synchronization signal to the TV set 5 as a video signal.

The DVD/CD-ROM drive 14 drives the DVD-ROM 6 provided with the game machine main body 2 as instructed by the CPU 8. Then, the DVD/CD-ROM drive 14 transfers the programs or data stored in the DVD-ROM 6 to the RAM 9 via the bus 7.

The communication interface 15 is connected to the external network 17 via the communication line 16, and receives/transmits programs or data from/to the external network 17 as instructed by the CPU 8.

The DVD-ROM 6 stores a game program 6a including programs and data necessary for advancing the game. The DVD/CD-ROM drive 14 drives the DVD-ROM 6 to read the program or data stored in the DVD-ROM 6. The program or data read from the DVD-ROM 6 are transferred from the DVD/CD-ROM drive 14 to the RAM 9 via the bus 7.

The TV set 5 includes a display screen 51 constituted by a cathode ray tube (CRT) and the like, which displays an image corresponding to the video signal output from the graphics processor 13. The TV set further includes a speaker 52 for outputting sounds corresponding to the sound signal from the sound processor 12. A television receiver is generally used as the TV set 5.

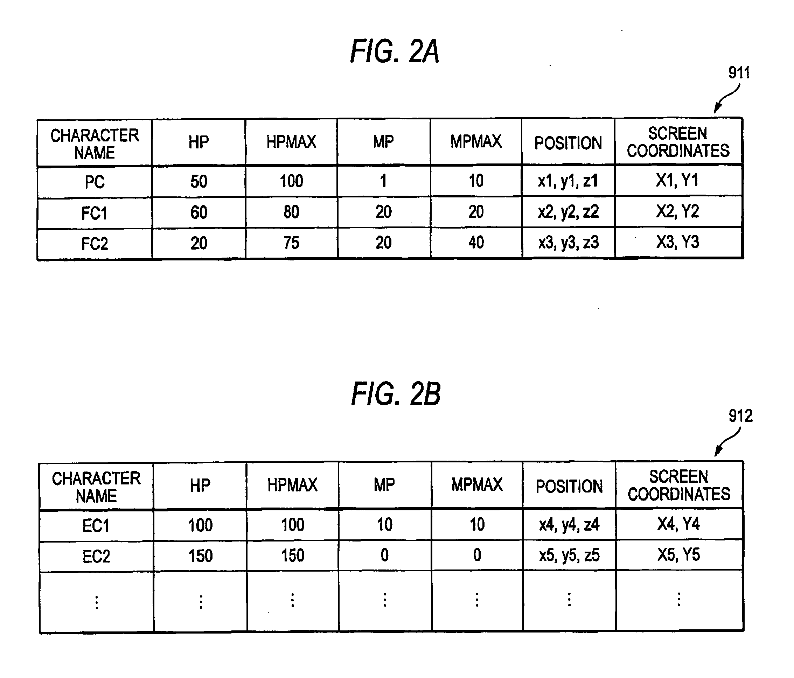

In this embodiment according to the above configuration, the CPU 8 allocates an area for storing information in the RAM 9. Then, the program storage area 91, the data storage area 92, the work area 93 and the like are reserved in the RAM 9. When the game start is requested, information necessary for starting the game is read from the DVD-ROM 6 to the RAM 9. Thus, the game program and the like are stored in the program storage area 91. A player character (PC) table 911 shown in Fig. 2A, an enemy character (EC) table 912 shown in Fig. 2B, and the like, are stored in the data storage area 92.

The PC table 911 and the EC table 912 include a current hit point (HP), a hit point maximum value (HPMAX), a current magic point (MP) and a magic point maximum value (MPMAX) for respective ones of the player character (PC), friendly characters (FC1, FC2) and the enemy characters (EC1, EC2 ...), which are identified in a "character name" column. The HPMAX indicates a maximum value of hit points given to a corresponding character in the game. The MPMAX indicates a maximum value of magic points given to a corresponding character in the game. The PC table 911 and the EC table 912 further contain data of a position at which the character is in a three-dimensional coordinate system and a screen coordinate system indicating a position at which the character is on the display screen 51.

In case where the player stops the game before finishing it, the data of the PC table 911 and the EC table 912 are stored in the memory card 4. Then, the data of the PC table 911 and the EC table 912 are read from the memory card 4 when the player restarts the game.

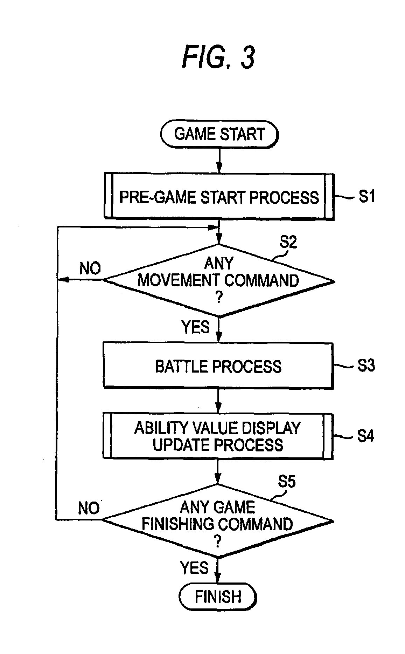

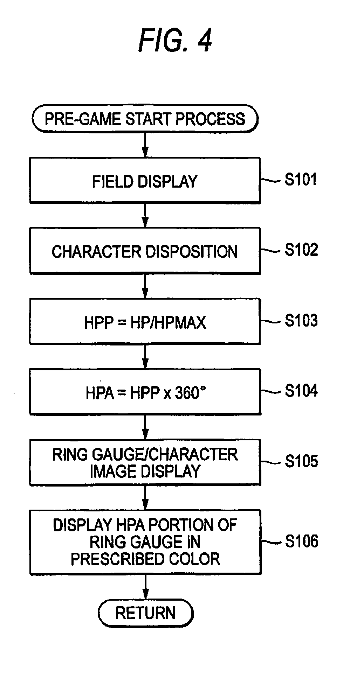

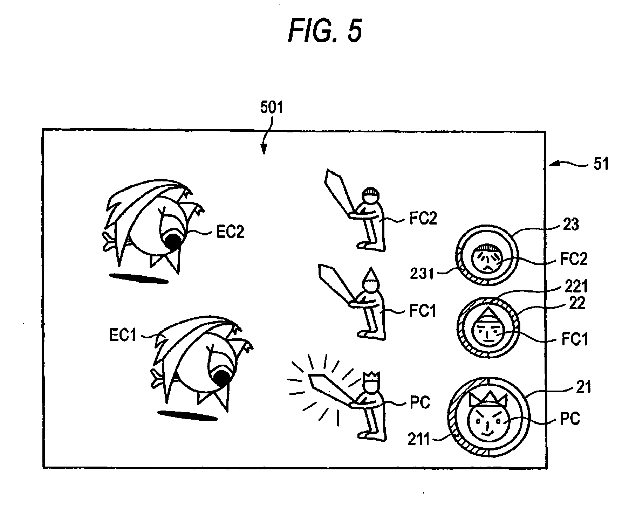

At the same time, the CPU 8 executes processing shown in the flowchart in Fig. 3 in accordance with the game program stored in the program storage area 91. Initially, the CPU 8 executes a pre-game start processing (step S1). Fig. 4 is a flowchart showing details of the pre-game start processing. The CPU 8 displays a virtual field of the game on the display screen 51 (step S101). Next, characters are arranged on the field based on the screen coordinate system (step S102). Then, as a result of the processing at step S102, the player character PC and the friendly characters FC1 and FC2, which move in accordance with an operation of the controller 3, and the enemy characters EC1, EC2, and the like, which are controlled by the CPU 8, are displayed on the display screen 51 as shown in, for example, Fig. 5.

The next steps S103 to S106 are executed for respective ones of the player character PC and the friendly characters FC1 and FC2. Initially, a hit point ratio (HPP), which is a ratio of the current hit points HP to the maximum hit points HPMAX set in advance for the player character PC and the friendly characters FC1 and FC2, is calculated by using the HP and HPMAX stored in the PC table 911. The HPP is calculated according to the formula of HPP=HP÷HPMAX (step S103). That is, for example, where the PC table 911 is as shown in Fig. 2A at the start of the game, the HP of the player character PC being 50 and the HPMAX being 100, the hit point ratio HPP is 0.5 (50%) according to the calculation HPP=50÷100.

Next, a drawing angle HPA is calculated according to the formula of HPA=HPPx360° (step S104). That is, as for the player character PC, the HPP being 0.5, the drawing angle HPA is 180° according to the calculation HPA=0.5x360°. Next, a ring gauge and character image display processing is executed (step S105). In this processing, circular ring gauges 21, 22 and 23 are displayed for the player character PC and the friendly characters FC1 and FC2, respectively, at an edge of the display screen 51. At the same time, the face images of the player character PC and the friendly characters FC1 and FC2 are displayed in the ring gauges 21, 22 and 23, respectively, as shown in Fig. 5. Furthermore, the drawing angle HPA portion of the ring gauges 21, 22 and 23 are displayed in a predetermined color (step S106) . Thus, as for the player character PC, the drawing angle HPA being 180°, a 180° portion of the ring gauge 21 is colored as a belt portion 21 as shown in Fig. 5.

Also, as for the friendly character FC1, the HP being 60 and the HPMAX being 80, the hit point ratio HPP is 0.75 according to the calculation HPP=60÷80. Thus, the drawing angle HPA is 270° according to the calculation HPA=0.75x360°. That is, a 270° portion of the ring gauge 22 is colored as a belt portion 221 as shown in Fig. 5. Also, as for the friendly character FC2, the HP being 20 and the HPMAX being 75, the hit point ratio HPP is 0.27 according to the calculation HPP=20÷75. Thus, the drawing angle HPA is 97° according to the calculation HPA=0. 27x360°. That is, a 97° portion of the ring gauge 23 is colored as a belt portion 231 as shown in Fig. 5.

After the pre-game start processing (step S1) is executed, for example, as discussed above, a detection processing is executed to determine whether a movement instruction has been input by a key operation to the controller 3 (step S2). This processing is repeated until the movement instruction is input ("NO" at step S2). When the movement instruction is input, a movement processing of the player character PC and the friendly characters FC1 and FC2 is executed in accordance with the input movement command ("YES" at step S2). When the player character PC and the friendly characters encounter an enemy character, a battle processing is executed (step S3). That is, the image processing and the like for virtually realizing a battle between the group of the player character PC and the friendly characters FC1 and FC2 and the group of the enemy characters EC1 and EC2 is executed on the display screen 51.

Next, an ability value display update processing (step S4) is executed. Then, it is determined whether a game finishing command has been input by a key operation of the controller 3 (step S5). The processing from step S2 to step S5 is repeated until the game finishing command is issued ("NO" at step S5). The processing of the flowchart ends when the game finishing command is input ("YES" at step S5).

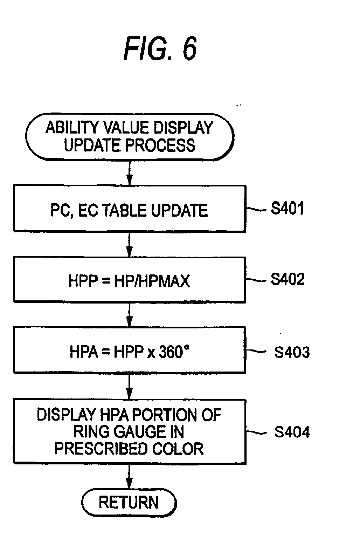

Fig. 6 is a flowchart showing details of the ability value display update processing (step S4). Initially, the PC table 911 (Fig. 2A) and the EC table 912 (Fig. 2B) are updated, for example, by adding a hit point changing amount ΔHP and a magic point changing amount ΔMP, which changing amounts result from the battle processing, to the HP and the MP, respectively (step S401). The processing at the next steps S402 to S404 are identical to that of S103, S104 and S106 in Fig. 4. That is, the hit point ratio HPP, which is the ratio of the HP to the HPMAX, is calculated (step S402) by using the HP in the PC table 911 updated in step S401. Next, the drawing angle HPA is calculated according to the formula of HPA=HPPx360° (step S403). Furthermore, the drawing angle HPA portions of the ring gauges 21, 22 and 23 are displayed in a predetermined color.

Thus, the lengths and angles of the belt portions 211, 221 and 231, as is shown in, for example, Fig. 5, of the ring gauges 21, 22 and 23 change in accordance with a change of the HP as the game advances. However, as the belt portions 211, 221 and 231 only change inside the ring gauges 21, 22 and 23, even in case where the belt portion gets longer, there is no visual effect on a game area 501 of the display screen 51, on which the player character PC, the friendly characters FC1 and FC2, and the enemy characters EC1 and EC2 are displayed. Also, the player is able to grasp a character's HP not only through the length of the belt portions 211, 221 and 231 in the ring gauges 21, 22 and 23, but also by the angles. That is, the player is able to grasp the HP instinctively and instantaneously. Therefore, it is possible to display the HP, which changes in accordance with the game progress, in such a way that the player is able to grasp the HP instinctively and instantaneously without feeling visual impediment.

Also, as the face images of the player character PC and the friendly characters FC1 and FC2 are displayed inside the ring gauges 21, 22 and 23, respectively, the player is able to grasp at a glance which of the HPs displayed by the ring gauges 21, 22 and 23 are the HPs of which character.

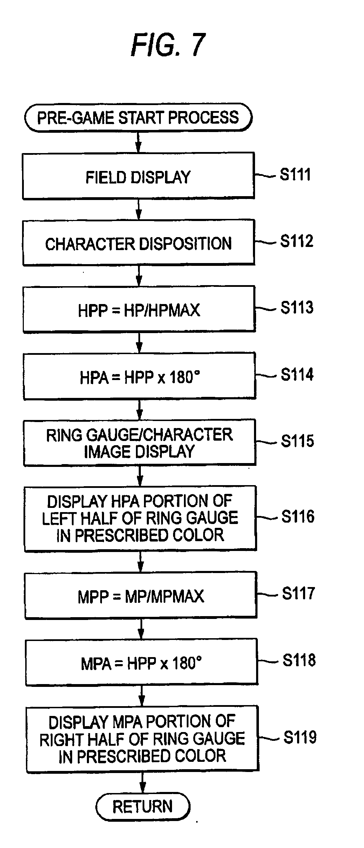

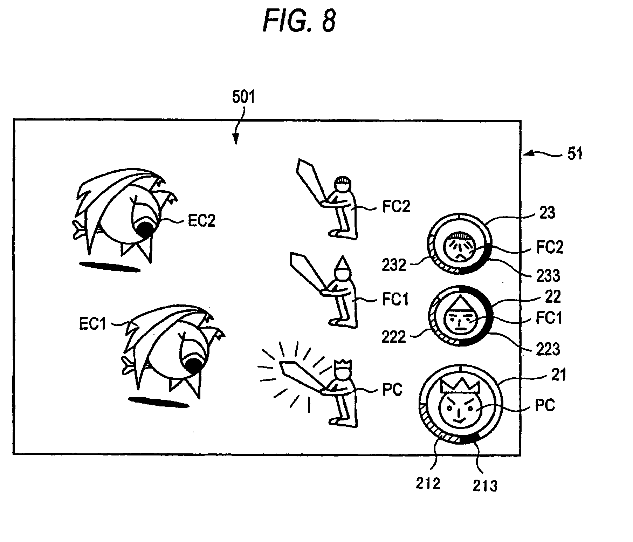

Figs. 7 to 9 show another embodiment of the invention, in which the HP and MP are displayed by a single ring gauge. Fig. 7 is a flowchart showing a pre-game start processing in the embodiment (step S1 shown in Fig. 3) . First, a virtual field of the game is displayed on the display screen 51 (step S111). Next, characters are arranged on the field (step S112). As a result of the processing at step S112, the player character PC and the friendly characters FC1, FC2, which are instructed to move in accordance with an operation of the controller 3, and the enemy characters EC1, EC2 etc., which are controlled by the CPU 8, are displayed on the display screen 51 as shown in Fig. 8.

The next steps S113 to S119 are executed for each of the player character PC and the friendly characters FC1 and FC2. Initially, a hit point ratio HPP, which is a ratio of the current hit points HP to the maximum hit points HPMAX set in advance for the player character PC and the friendly characters FC1 and FC2, is calculated by using the HP and HPMAX stored in the PC table 911 (step S113). The HPP is obtained according to the formula of HPP=HP÷HPMAX. That is, in case where the PC table 911 is as shown in Fig. 2A at the start of the game, the HP of the player character being 50 and the HPMAX being 100, the hit point ratio HPP is 0.5 (50%) according to the calculation HPP=50÷100.

Next, a drawing angle HPA is calculated according to the formula of HPA=HPP×180^{o} (step S114). That is, as for the player character PC, the HPP being 0.5, the drawing angle HPA is 90° according to the calculation HPA=0.5×180°. Next, a ring gauge and character image display processing is executed (step S115). In this processing, as shown in Fig. 8, circular ring gauges 21, 22, and 23 are displayed for the player character PC and the friendly characters FC1 and FC2, respectively, at an edge of the display screen 51, as shown in Fig. 8. At the same time, face images of the player character PC and the friendly characters FC1 and FC2 are displayed in the ring gauge 21, 22 and 23, respectively. Furthermore, the drawing angle HPA portion is displayed in the left half of the ring gauges 21, 22 and 23 in a predetermined color (step S116). That is, as for the player character PC, the drawing angle HPA being 90° as described heretofore, a 90° portion of the left half of the ring gauge 21 is colored in a predetermined color as an HP belt portion 212 as shown in Fig. 8.

Also, as for the friendly character FC1, the HP being 60 and the HPMAX being 80, the hit point ratio HPP is 0.75 according to the calculation HPP=60÷80. Therefore, the drawing angle HPA is 135° according to the calculation HPA=0.75x180°. Thus, a 135° portion of the left half of the ring gauge 22 is colored an HP belt portion 222 as shown in Fig. 8. Also, as for the friendly character FC2, the HP being 20 and the HPMAX being 75, the hit point ratio HPP is 0.27, according to the calculation HPP=20÷75. Therefore, the drawing angle HPA is 49°, according to the calculation HPA=0.27x180°. Thus, a 49° portion of the left half of the ring gauge 23 is colored as an HP belt portion 232 as shown in Fig. 8.

Furthermore, a magic point ratio MPP, which is a ratio of the current magic points MP to the maximum magic points MPMAX set in advance for the player character PC and the friendly characters FC1 and FC2, is calculated according to the formula of MPP=MP÷MPMAX by using the MP and MPMAX stored in the PC table 911 (step S117) . That is, in case where the PC table 911 is as shown in Fig. 2A at the start of the game, the MP of the player character PC being 1 and the MPMAX being 10, the magic point ratio MPP is 0.1 (10%) according to the calculation MPP=1÷10.

Next, a drawing angle MPA is calculated according to the formula of MPA=MPP×180° (step S118). Consequently, as for the player character PC, the MPP being 0.1, the drawing angle MPA is 18° according to the calculation MPA=0.1×180°. Then, the drawing angle HPA portions of the right halves of the ring gauges 21, 22 and 23 are displayed in a predetermined color (step S119). Therefore, as for the player character PC, the drawing angle MPA being 18° as described heretofore, an 18° portion of the right half of the ring gauge 21 is colored as an MP belt portion 213 as shown in Fig. 8.

Also, as for the friendly character FC1, the MP being 20 and the MPMAX being 20, the magic point ratio MPP is 1. Therefore, the drawing angle MPA is 180° according to the calculation MPA=1×180°. That is, a 180° portion of the right half of the ring gauge 22 is colored as an MP belt portion 223 as shown in Fig. 8. Also, as for the friendly character FC2, the MP being 20 and the MPMAX being 40, the magic point ratio MPP is 0.5 according to the calculation MPP=20÷40. Therefore, the drawing angle MPA is 90° according to the calculation MPA=0.5x180°. That is, a 90° portion of the right half of the ring gauge 23 is colored as an MP belt portion 233 as shown in Fig. 8.

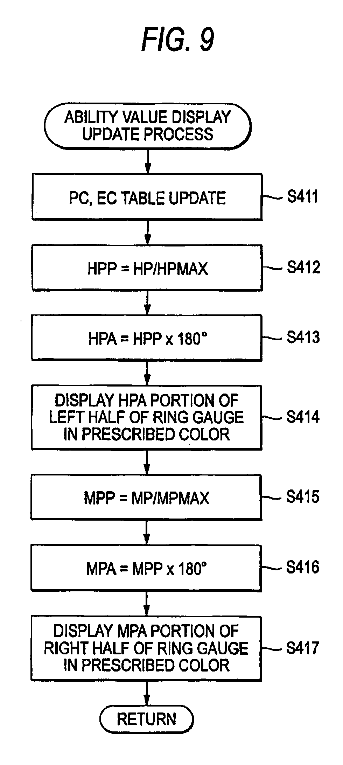

Fig. 9 is a flowchart showing details of the ability value display update process (step S4 shown in Fig. 3) . Initially, the PC table 911 (Fig. 2A) and the EC table 912 (Fig. 2B) are updated, for example, by adding a hit point changing amount ΔHP, which results from the battle processing, to the HP (step S411). The processing at next steps S412 to S417 are identical to that of steps S113, S114 and S116 to S119 in Fig. 7. That is, the hit point ratio HPP, which is the ratio of the HP to the HPMAX, is calculated (step S412) by using the HP in the PC table 911 updated in step S411. Next, the drawing angle HPA is calculated according to the formula of HPA=HPP×180° (step S413). Furthermore, the drawing angle HPA portions of the left halves of the ring gauges 21, 22 and 23 are displayed in the predetermined color (step S414). Thus, a length and angle of the belt portions 212, 222 and 232 in the left half of the respective ring gauges 21, 22 and 23 change in accordance with the change of the HP as the game advances.

Also, the magic point ratio MPP, which is the ratio of the MP to the MPMAX, is calculated (step S415) by using the MP in the PC table 911 updated in step S411. Next, the drawing angle MPA is calculated according to the formula of MPA=MPP×180° (step S416). Furthermore, the drawing angle MPA portions of the right halves of the ring gauges 21, 22 and 23 are displayed in the predetermined color (step S417). Thus, a length and angle of the belt portions 213, 223 and 233 in the right half of the respective ring gauges 21, 22 and 23 change in accordance with the change of the HP as the game advances.

From the foregoing, according to the embodiment, it is possible to display the HP and MP as a ratio using the single ring gauges.

Although, in the embodiment, a circular ring gauge is used, without being limited to a circular form, gauges of other forms may be used as long as it is elliptical or polygonal. Also, in the embodiment, one kind (HP) and two kinds (HP and MP) of ability values are displayed in a form of a single ring gauge. However, additional kinds of ability values may be displayed by using a single ring gauge.

Also, a home-use game device is used as a platform in this embodiment. However, the present invention may be implemented using general-purpose computers such as personal computers and like or arcade game machines, or portable games machine, PDAs or cellular telephones as a platform.

Also, in this embodiment, the program and data for implementing the present invention are stored in a DVD-ROM, and the DVD-ROM is used as a recording medium. However, the recording medium is not limited to the DVD-ROM, and other computer-readable magnetic or optical recording mediums, or a semiconductor memory may be used as the recording medium. Furthermore, the program or data for implementing the present invention may be provided by pre-installing them in a storage apparatus of a game machine or a computer.

Furthermore, the program or data for implementing the present invention may be downloaded to the HDD 10 by the interface portion 15 from other devices on the network 17 connected to the interface portion via the communications line 16. Also, the program or the data may be stored in memories of the other devices on the communications line 16. Then, the program or the data may be sequentially stored in the RAM 9 via the communications line 16 when needed.

In addition, the program or the data for implementing the present invention may be provided as a computer data signal superimposed on a carrier wave from other devices on the network 17. In this case, the computer interface 15 requests the other devices on the network 17 to transmit the computer data signal, and the RAM 9 stores the transmitted computer data. Thus, the present invention may be implemented by the game apparatus 1 using the program or the data stored in the RAM 9 as above.

Also, although the game by two-dimensional image processing is described as an example in the embodiment, the invention may be applied to a game using three-dimensional image processing.

Although the invention has been described with reference to several exemplary embodiments, it is understood that the words that have been used are words of description and illustration, rather than words of limitation. Changes may be made within the purview of the appended claims, as presently stated and as amended, without departing from the scope and spirit of the invention in its aspects. Although the invention has been described with reference to particular means, materials and embodiments, the invention is not intended to be limited to the particulars disclosed; rather, the invention extends to all functionally equivalent structures, methods, and uses such as are within the scope of the appended claims.

## Claims

1. A game apparatus for realizing a virtual battle between characters on a display and changing an ability value of a character in a game, the apparatus comprising:
an acquirer that acquires a current ability value of the character;
a calculator that calculates a ratio of the current ability value to a maximum ability for the character; and
a display processor that displays the current ability value as a ratio in a circular gauge on the display based on the ratio calculated by the calculator.

2. The game apparatus according to claim 1 or 2, wherein
a plurality of types of ability values are provided;
the acquirer acquires the current ability value for each of the plurality of types of ability values;
the calculator calculates the ratio for each of the plurality of types of ability values; and
the display processor divides the circular gauge into a plurality of portions according to each of the plurality of types of ability values and displays the current ability value for each of the plurality of types of ability values as a ratio in each of the portions.

3. The game apparatus according to claim 1 or 2, wherein the display processor displays a corresponding character as an object inside the circular gauge.

4. The game apparatus according to any one of claims 1 to 3, wherein the character is a player character controlled in accordance with an operation by a user.

5. The game apparatus according to any one of claims 1 to 3, wherein the characters include the player character controlled in accordance with the operation by the user and a friendly character acting as a friend of the player character in the game;
the acquirer acquires an ability value for each of the player character and the friendly character;
the calculator calculates the ratio for each of the player character and the friendly character; and
the display processor displays the current ability value as a ratio for each of the player character and the friendly character.

6. An ability value display control method for a video game that realizes a virtual battle between characters on a display and changes an ability value of a character, the method comprising:
acquiring a current ability value of the character;
calculating a ratio of the current ability value to a maximum ability value for the character; and
displaying the current ability value as a ratio in a circular gauge on the display based on the calculated ratio.

7. The ability value display control method according to claim 6, wherein
a plurality of types of ability values are provided;
the current ability value is acquired for each of the plurality of types of ability values;
the ratio is calculated for each of the plurality of types of ability values by the calculation, and
the circular gauge is divided into a plurality of portions according to each of the plurality of types of ability values and the current ability value for each of the plurality of types of ability values is displayed as a ratio in each of the portions.

8. The ability value display control method according to either claim 6 or 7, wherein a corresponding character is displayed as an object inside the circular gauge.

9. The ability value display control method according to any one of claims 6 to 8, wherein the character is a player character controlled in accordance with an operation by a player.

10. The ability value display control method according to any one of claims 6 to 8, wherein:
the characters comprise the player character controlled in accordance with an operation by a user and a friendly character acting as a friend of the player character in the game;
the ability value is acquired for each of the player character and the friendly character;
the ratio is calculated for each of the player character and the friendly character; and
the current ability value is displayed as a ratio for each of the player character and the friendly character.

11. An ability value display control program executed by a computer included in a game apparatus for realizing a virtual battle between characters on a display and changing an ability value of a character in a game, the program causing the computer to execute:
acquiring a current ability value of the character;
calculating a ratio of the current ability value to a maximum ability value for the character; and
displaying the current ability value as a ratio in a circular gauge on the display based on the calculated ratio.

12. The ability value display control program according to claim 11, wherein:
a plurality of types of ability values are provided;
the current ability value is acquired for each of the plurality of types of ability values;
the ratio is calculated for each of the plurality of types of ability values by the calculation, and
the circular gauge is divided into a plurality of portions according to each of the plurality of types of ability values and the current ability value for each of the plurality of types of ability values is displayed as a ratio in each of the portions.

13. The ability value display control program according claim 11 or 12, wherein a corresponding character is displayed as an object inside the circular gauge.

14. The ability value display control program according to any one of claims 11 to 13, wherein the character is a player character controlled in accordance with an operation by a player.

15. The ability value display control program according to any one of claims 11 to 13, wherein:
the characters include a player character controlled in accordance with an operation by a user and a friendly character acting as a friend of the player character in the game;
the ability value is acquired for each of the player character and the friendly character;
the ratio is calculated for each of the player character and the friendly character; and
the current ability value is displayed as a ratio for each of the player character and the friendly character.

16. A computer readable recording medium recording an ability value display control program executed by a computer included in a game apparatus for realizing a virtual battle between characters on a display and changing an ability value of a character in a game, the program causing the computer to execute:
acquiring a current ability value of the character;
calculating a ratio of the current ability value to a maximum ability value set for the character; and
displaying the current ability value as a ratio in a circular gauge on the display based on the calculated ratio.

17. The recording medium according to claim 16, wherein:
a plurality of types of ability values are provided;
the current ability value is acquired for each of the plurality of types of ability values;
the ratio is calculated for each of the plurality of types of ability values by the calculation, and
the circular gauge is divided into a plurality of portions according to each of the plurality of types of ability values and the current ability value for each of the plurality of types of ability values is displayed as a ratio in each of the portions.

18. The recording medium according to claim 16 or 17, wherein a corresponding character is displayed as an object in the circular gauge.

19. The recording medium according to any one of claims 16 to 18, wherein the character is a player character controlled in accordance with an operation by a user.

20. The recording medium according to any one of claims 16 to 18, wherein:
the characters include the player character controlled in accordance with an operation by a user and a friendly character acting as a friend of the player character in the game;
the ability value is acquired for each of the player character and the friendly character;
the ratio is calculated for each of the player character and the friendly character; and
the current ability value is displayed as a ratio for each of the player character and the friendly character.
